Europäisches Patentamt

(19) **European Patent Office** (11) Publication number: **0 194 589**

**Office européen des brevets** **B1**

(12) **EUROPEAN PATENT SPECIFICATION**

(45) Date of publication of the patent specification:
15.11.89

(51) Int. Cl.⁴: **C 23 G 5/02,** C 23 G 5/04,
B 01 D 12/00

(21) Application number: 86102960.9

(22) Date of filling: 06.03.86

(54) Apparatus and method for cleaning and drying surfaces of non-absorbent articles.

(30) Priority: 11.03.85 US 710764

(43) Date of publication of application:
17.09.86 Bulletin 86/38

(45) Publication of the grant of the patent:
15.11.89 Bulletin 89/46

(84) Designated Contracting States:
DE GB

(56) References cited:
EP-A-0 017 459
DE-A-3 142 338
FR-A-2 325 404
US-A-3 396 181
US-A-3 710 450
US-A-4 510 063

(73) Proprietor: ALLIED- SIGNAL INC. (a Delaware
corporation), Columbia Road and Park Avenue
P.O. Box 2245R, Morristown New Jersey 07960
(US)

(72) Inventor: Figiel, Francis John, c/o ALLIED
CORPORATION P.O. Box 2245R, Morristown, NJ
07960 (US)

(74) Representative: Brock, Peter William, URQUHART-
DYKES & LORD 91 Wimpole Street, London
W1M 8AH (GB)

Note: Within nine months from the publication of the mention of the grant of the European patent, any person may give notice to
the European Patent Office of opposition to the European patent granted. Notice of opposition shall be filed in a written reasoned
statement. It shall not be deemed to have been filed until the opposition fee has been paid (Art. 99(1) European patent convension).

LIBER, STOCKHOLM 1989

## Description

### Background of the Invention

This invention relates to an improved azeotropic solvent drying and cleaning system which include a volatile solvent that has a capability of removing water, hydrophylic residues or other films from the surface of substrates and a novel apparatus and method. Removal of the hydrophylic and water containing residues from the substrate surface to be cleaned is effected by displacement or dissolution; cleaning in this manner avoids multi-stage cleaning and drying steps and, in the case of metals, avoids potential corrosion of the kind that results when aqueous cleaning methods are used.

A variety of lubricants, including the conventional petroleum oil type, the water soluble oils and the synthetic or semisynthetic fluids are employed in metal working. Some of these fluids pose a difficult problem when attempts are made to completely cleanse and dry and free the surface of such materials. Vapor degreasers using chlorinated solvents such as 1,1,1-trichloroethane, trichloroethylene, perchloroethylene or methylene chloride are common methods of cleaning metal and other non-absorbent surfaces and work effectively on surface films that are hydrophylic and are typically comprised of oil, water surfactants, metal salts and the like. However, these chlorinated solvents frequently break down and form corrosive hydrochloric acid in the presence of water. Also, many cleaning schemes are not designed to remove water as well as cleaning the surface, a problem that is especially acute when water-extendable metalworking fluids are to be cleaned in a vapor degreaser with a chlorinated solvent.

While the problems resulting from handling water contaminated cleaning fluid could be alleviated by placing only dried or non-water heated parts in the degreaser, this option is not practical especially because a dry film present on an article is often difficult to remove satisfactorily. Also, the elapsed time required to allow parts to dry increases, the work-in-process inventory. Requiring parts to sit prior to cleaning increases handling, lower productivity and reduces manufacturing flexibility.

US-A-3 559 297, -3 589 023 and -3 710 450 disclose systems for removing water films from cleaned substrates. The present invention deals with a system for the treatment of substrates which are contaminated and require cleansing as well as drying; the operation being effected by a single cleansing/drying system.

DE-A-3 142 338 relates to the removal of water from non-adsorbent articles using a halohydrocarbon solvent which either does not form an azeotrope, or which forms an azeotrope containing at most 4 % of water. The article is immersed in a first bath of pure halohydrocarbon, which does not contain cleaning agents or surface-active substances, to remove a major proportion of the surface water. The article is then transferred to a series of secondary baths which contain a mixture of the halohydrocarbon and an alcohol. The article is then exposed to solvent vapor from this halohydrocarbon/alcohol mixture in a space above the secondary baths. This vapor is provided by a distillation unit which is fed by solvent from the first of the secondary baths which has been passed through a molecular sieve and a filter. Condensed vapor from the distillation unit passes from the condenser to another molecular sieve and filter before being returned to the second of the secondary baths.

EP-A-0 017 459 involvas a process in which vapor is condensed and dewatered by gravity separation. Any solvent remaining in the water is separated in a rectifier and subsequently recycled to the dewatering bath. In the embodiment of Fig. 6, solvent after separation of water is conducted from the tank to the evaporator. Overflow from the evaporator can pass to a tank where it may be dried by means of zeolite and filtered before it is recycled to the evaporators.

Nevertheless, a need exists for an effective solvent surface cleaning and drying system and, particularly, a system which is readily renewable by separating the water and accumulated surface contaminants therein during use of the solvent without encountering substantial interference by the build up of water and contaminants in the solvent.

It is an object of the present invention to provide a cleansing and drying system that produces improved drying capabilities. The solvent employed can withstand severe use in the water desorption and cleansing operations without a substantial change in the cleaning and drying capability of the solvent.

One embodiment of this invention provides a method for cleaning and drying the surface of a non-absorbent article to remove hydrophilic residues, by immersion of said article in a liquid azeotropic organic solvent having a density greater than water and in which water is soluble in an amount between 0.001 and 1.0 weight percent. According to the method of the invention:

(a) the article is immersed in a first bath of said solvent while said solvent is boiling;

(b) the article is lifted from the first bath;

(c) the article is immersed in a second bath of said solvent having a greater purity than the solvent in the first bath, and being at a temperature below boiling point;

(d) the article is lifted from the second bath into the vapour phase of said solvent;

(e) solvent in said vapour phase is condensed, dried and employed to rinse said article while it is retained in said vapour phase;

(f) said article is retained in said solvent vapour until condensation of vapour on the article has ceased;

(g) solvent from the first bath, which has been contaminated with hydrophilic residues as a result of said cleaning, is continuously removed from said bath and purified by

(i) filtration to free it from particulates,

(ii) distilling the filtered solvent from step (i) to separate relatively high boiling components, and

(iii) drying the distillate to remove any residual moisture; and

(h) dried solvent from step (g) (iii) is returned in regulated manner to the second bath.

Another embodiment of the invention provides apparatus for cleaning and drying the surface of a non-absorbent article to remove hydrophilic residues, by immersion of said article in a liquid azeotropic organic solvent, which apparatus comprises:

(a) a heatable sump adapted to contain a first bath of said solvent;

(b) a second sump adapted to contain a second bath of said solvent;

(c) means for condensing solvent vapour above said sumps, means for drying condensed solvent, and means for spraying dried condensed solvent over an article held over said second sump;

(d) means for conducting solvent from the first sump, through filtration distillation and drying means, and;

(e) means for returning dried solvent from step (d) in regulated manner to the second sump.

This invention provides a method and apparatus capable of effectively removing contaminated surface films from non-absorbent articles. Articles contaminated with metal working liquids and/or treating compositions are immersed in azeotropic mixtures. The surface liquid film is removed by either being displaced or dissolved by the azeotropic solvent which, in turn, is purified through a still and solvent desiccants and recycled. Articles moved through a vapor phase of the azeotropic solvent are withdrawn clean and dry.

With the cleaning and drying system of the invention, typically the contaminated, parts are immersed into the working sump containing the heated azeotropic solvent; contaminants remaining on parts are displaced by the azeotropic solvent. The solvent containing the contaminants removed from the surface and containing dissolved oil, displaced water and particulate matter is freed of these contaminants by continuously passing it through a still and solvent desiccants. The dried and cleaned distillate solvent is fed into the boiling working sumps. In subsequent steps of the cleaning operation, the article is rinsed. Thereafter, the article is vapor dried. In the vapor drying, the parts are held in the azeotropic solvent vapor until the parts reach the vapor temperature. Parts normally remain in the solvent vapor until condensation stops. With dwell times typically being of the order of 30 seconds to 2 minutes, depending on the surface area-to-mass ratio and substrate type. As the parts are withdrawn from the vapor, the solvent evaporates, leaving the article clean and dry.

The method contemplates immersing an article covered by a liquid (water) contaminated with residual inorganic salts and organic matter into a solvent bath. The liquid solvent is capable of dissolving only minimal amounts of water therein, between 0.001 and 1.0 weight percent, preferably between 0.001 and 0.5 weight percent, and most preferably not more than 0.1 weight percent, of water based on the weight of the solvent. The solvent bath is subjected to vigorous agitation by any physical means to enhance the cleansing of the surface of treated articles including, for example, heating the bath to boil to produce turbulence throughout the bath, stirring, ultrasonics, and the like, thereby displacing and dissolving surface residue film from the article. The solvent containing the displaced contaminated liquid is transferred directly to a still, which uses a molecular sieve to dry the solvent; the distillate is then returned to the solvent bath. The article is removed from the solvent bath and reimmersed in the second bath (second sump). Thereafter, the article is removed and subjected to a rinse with clean and dry distillate and a short hold in the vapor phase of the azeotropic solvent.

The apparatus of the invention which is adapted to carry out the aforementioned method-process is comprised essentially of the following in combination: a first sump adapted to contain the azeotropic-solvent with means to agitate the liquid-solvent provided in the said first sump. A second sump similar to the first is provided; and the azeotropic solvent returned from the distillation process and freed of the contaminants overflows into the first sump. At least one of the sumps is provided with a heating means to boil the azeotropic solvent to generate vapors above the solvent liquid. The distillate is passed through molecular sieves comprising a solvent desiccant and is filtered before entering the second sump. The still is equipped with means to maintain constant distillation rate to provide an appropriate amount of azeotrope solvent flow.

The azeotropic compositions of the invention have good wetting ability and solvency power to displace hydrophilic residues associated with water and to disolve organic contaminants. Preferably, these azeotropics must be capable of boiling between 30°C and 46°C have a solubility of water of between 0.001 and 1.0 weight percent, based on the weight of the azeotropic solvent and be stable in the presence of water and white metals, such as aluminium and galvanized steel. The preferred cleansing/drying liquid solvents employed are the azeotropic composition of trichlorotrifluoroethane and at least one aliphatic alcohol of 1 to 5 carbon atoms, and may optionally contain one or more other components. Typical examples of mixtures are trichlorotrifluoroethaneisopropanol; tri-

chlorotrifluoroethane-isopropanolnitromethane; trichlorotrifluoroethane-isopropanol ethanolnitromethane and trichlorotrifluoroethane-acetone- hexanenitromethane.

The figure of the drawing is a schematic view of an embodiment of the apparatus of the invention showing the components of the system comprising a main product treating vessel, the solvent purifier, the primary solvent dryer, and the secondary solvent dryer.

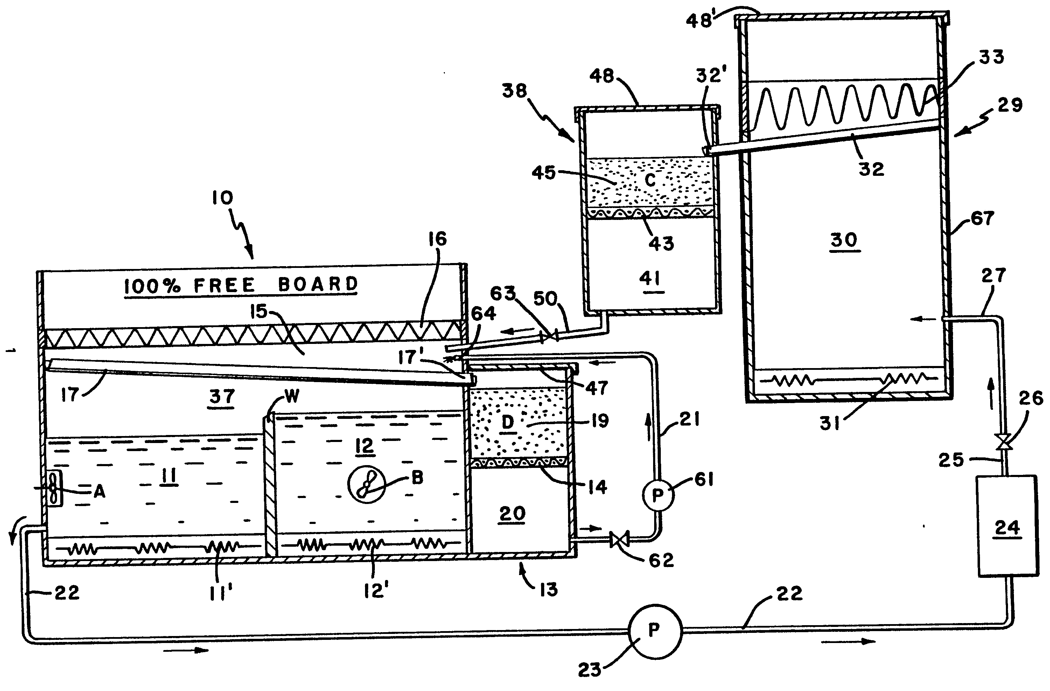

As seen by reference to Fig. 1 of the drawing, the novel apparatus of the invention comprises a plurality of sequential product-treating compartments. Basically the compartments include the product treating or main vessel 10, the solvent purifier still 29, the primary solvent drying system vessel or container 38, and the secondary drying solvent vessel 13.

The main treating vessel 10, comprised of two rectangular treating compartments, a first compartment 11 and a second compartment 12. The main treating vessel 10 is equipped with a cooling jacket 16 which functions to condense vapors and inhibit solvent loss out the vapor zone 37 above the boiling azeotropic liquid, and with heating elements 11', 12'. Additionally, agitating means A, B and/or alternatively, a transducer (not shown) may be used to provide ultrasonic energy to promote loosening of particles or metal salt residues that are on the processed articles during the cleaning process. The agitating devices are also employed to keep dissolved matter in suspension, preventing them from redeposition, especially if the nature of the articles being processed does not allow use of temperatures at which the boiling solvent would provide sufficient agitation. In addition, the first main treating vessel 10 is equipped with a trough 17 slightly inclined toward the entrance 17 to the secondary solvent drying system to permit condensed vapors and moisture to flow by gravity toward the point 17' where the solvent is fed into the secondary drying vessel 13. The four sections represented by the vessels 10, 13, 29 and 38 are connected with each other by piping, generally referred to by conduits 22, 25, 27, 32, 50, 17, 21, that allow the solvent to flow through the four sections of the apparatus, and which flow is regulated by a series of pumps 23, 61 and valves 26, 62, 63.

The primary and secondary drying operations effected in the primary solvent dryer 38 and the secondary dryer 13, respectively are each comprised of two compartments 45, 41, and 19, 20 respectively separated by filter cartridges 43 and 14, respectively, so that particulate matter ejected or washed off from the molecular sieves is retained and does not contaminate the solvent in the compartments 11 and 12 of the main treating vessel 10. Each of the vessels 38 and 13 has removable covers 48 and 47 respectively. The size of compartments 19 and 45 depends on the volume to accommodate a mass of approximately 4.5 to 9 (10 to 20 lbs) of solvent desiccant contained in cartridges C and D that are inserted into the compartments 45 and 19. The solvent desiccant is preferably a molecular sieve resin commercially available from various sources such as Union Carbide Corporation, Fisher Scientific Company, etc. and is sold under various trade names. Such as Davison type 3A or 4A Grade 514, 8 - 12 mesh beads. Preferably, water adsorption capacity of these sieves is at least 10 percent by weight, water retention rate 40 - 70 percent by weight at a flow rate of about 32 liter/hour/9 kg (7 gallons/hour/20 lb.) of sieve at each pass to yield a drying effectiveness capable of removing at least 40 percent of the water present for each pass through the molecular sieve. These sieves can be regenerated by known means such as passing through desorption such as by placing them in an oven at 140°C for about 48 hours. The lower vessels 41, 20 of the primary and secondary solvent drying systems 38 and 13 hold sufficient amount of a solvent to maintain a working volume. In the space 41 sufficient volume of solvent is maintained with controlled release through valve 63 to have a working volume of the azeotropic solvent in vessels 11 and 12. The flow of the solvent through the valve 63 must be in balance with the out flow of solvent removed through pump 23.

The volume of solvent in space 20 must be sufficient to rinse articles upon removal of the article from the immersion steps in compartments 11 and 12. In the secondary solvent drying system, the clean solvent flows from compartment 20 through valve 62, pump 61, pipe 21 and outlet 64. Outlet 64 may be suitably connected to an arrangement such as a spray nozzle (not shown) that facilitates rinsing of the article to be cleaned and dried with the azeotropic solvent.

In the primary solvent drying system, the clean solvent flows from vessel 41 through pipe 50, valve 63 to the main treating sump 11, 12. An auxiliary filtering system 24 used to remove particulates which inadvertently find their way into the solvent during processing of articles and may, through physical forces associated with flash distillation, contaminate the solvent vapors in the still 29. The still 29, which purifies the solvent comprises a suitable compartment 30 equipped with heating elements 31, cooling jacket 33 and a condensing trough 32 that is connected at 32' with the primary drying solvent system 38. The still 29, functions to remove relatively high boiling components from the contaminated azeotropic mixture maintained operational through suitable conventional solvent flow level control means (not shown) that cuts off the power when solvent level drops below a predetermined level. Insulation 67 is employed to maintain efficiency and conserve energy. A removable cover 48' prevents solvent emissions.

In the process circuit, the solvent from the treating vessel 11 flows through pipe 22, pump 23, filter 24, pipe 25, valve 26 and pipe 27 to the still 29 where it is changed to vapor and condensed at the cooling mantel 33 in the purifier 29 and flows via trough 32 into vessel 38 at 32';

where it passes through the solvent desiccant cartridge C in chamber 45, filter 43 and passes 43 into chamber 41 from where it then flows via pipe 50 and valve 63 into the treating vessels of 11 and 12.

The solvent, in the treating vessels, upon contact with the articles contaminated with water and associated contaminants, e.g. hydrated residues from water based lubricants or precious metals from plating solution, wets the non-absorbent surfaces and in the process replaces the contaminants with a film of the solvent. The contaminants lifted from the surface of the article mixed with and are carried away with the solvent. The azeotropic cleaning solvent forms a mixture of various compositions. This solvent which is maintained in an agitated state is removed through the pipe 22 and pump 23, auxiliary filter 24 and passes to the purifier 29. At the same time the solvent supply is constantly replenished by flow of solvent from compartments 41 and 20, retaining an appropriate solvent purity and working volume. The article is rinsed with the filtered solvent from compartment 20 to assure a high level of cleanliness of the article. Additionally, the article is held in the vapor zone 15 where all the liquid film of the rinse solvent is changed into its vapor while the article temperature is raised above the ambient; this prevents moisture condensation on the surface of the article.

The process may vary in sequences from the above, e.g. first immersion of the article in boiling solvent, then optionally in non-boiling solvent, ringing and finally exposure of the article in the vapor zone. The process is advantageously independent of the amount of water film on the article purity of these films, presence of some other hydrated residues in the film and type of treated articles, glass, metal plastic, equipment and other articles having non-absorbent surfaces.

The solvent employed in the novel system of the invention is an azeotropic mixture of 1,1,2-trichloro 1,2,2-trifluoroethane (R-113) or its isomeric mixture with one or more co-solvents which form an azeotrope. These co-solvents belong to the group of ahphatic alcohols and ketones and nitromethane. Specifically included are ethanol, isopropanal, nitromethane and acetone. Azeotropic mixtures which may be employed include these disclosed in U.S. Patent 3 789 006 and 4 052 328. The solvent azeotropes are totally evaporative, leaving no residues, being not flammable, having threshold limit values about 500 ppm as defined by American Conference of Governmental and Industry Hygenists (ACGIH). These azeotropic solvents are compatible with material of construction of the articles processed. Additionally, these solvents have a water solubility limited to no more than 0.1 weight percent and preferable to not more than 0.05 weight percent water and which themselves are soluble in water to no more than 0.1 weight percent. The azeotropes may be two or more component mixtures which are recognized by those skilled in the arts, as being azeotrope-like or constant boiling mixtures. It is important that said mixtures have a good wetting ability and chemical stability.

The above data show that the system is capable of continuously disposing large quantities of water without affecting this capability of thoroughly drying wet articles.

A typical cleaning process of aluminum parts to be used in the aircraft industry, the apparatus and an azeotrope contemplated by the invention will now be described in accordance with the invention. The aluminum parts, which have been machined and are covered with a film of water based lubricant, are cleaned and dried by reference to the system of the invention. The residue on the parts is typically an oil in water emulsion which is used as a lubricant in the machining of the parts and comprises, as the main ingredients, water, a water soluble detergent and oil. These lubricants are often difficult to remove completely from the surface because of electrostatic or polar forces. Also, the nature of the films are such that they are not normally wholly dissolvable in organic solvents and in the course of conventional cleaning operation chlorinated solvents are used such as trichloroethylene and trichloroethane. Such materials often present environmental or stability problems and are generally impractical.

In the cleaning and drying operation, using the system of the invention the parts are placed in an open (perforated) stainless steel carrier and immersed in solvent in compartment containing the azeotropic composition of trichlorotrifluoroethane, ethanol, isopropanol and nitromethane in a weight ration of 93.5; 3.5; 2.0; 1.0, respectively.

The parts are maintained in the boiling solvent in sump 11 for 1 to 2 minutes then rinsed with purified solvent and dried in vapor zone 15. The parts may be optionally immersed again in solvent in compartment 12 in which case the rinsing would then be effected after the second immersion only. The parts are then elevated into the vapor zone 15 where the parts are held until condensation on the parts ceases, a period of about 1 - 2 minutes. The parts are then removed and transferred for further processing. The emulsion film removed from the parts is partially dissolved and contaminates the azeotropic solvent mixture in the compartment 11 and, to a lesser extent, the solvent mixture in compartment and 11. This film also forms a separate phase with some components of the emulsion. In purifying the contaminated azeotropic solvent; it is drawn-through pipe 22 and filtered at 24 to remove unsoluble particulates and introduced into the purifier still 29. In the still 29, the azeotropic mixture is distilled over into the primary drier 38 where the azeotropic solvent is dried through the molecular sieve C to remove moisture and then filtered through filler 43 to remove residual particles or bits of particles that may be generated by the granules of the molecular sieve. The filtered solvent is then collected in chamber 41, and transferred through pipe 50 to the treating bath 11. When the compartment 12 is filled, the excess overflows the weir W into compartment 11. The effect is to maintain a relatively pure composition in compartment 12 inasmuch as the contaminated azeotropic solvent is displaced by purified and dried solvent from chambers 41 and 20 and is carried over the weir W to compartment 11. In the vapor zone 15, the condensing vapor is collected in the trough 17 and channeled through the molecular sieve D. The condensate typically contains quantities of moisture, the amount of which may vary to some extent depending on the ambient humidity. The azeotropic solvent passing through the molecular sieve is freed of the moisture content filtered at 14 collected at 20 and then pumped via line 21 and optionally comprises at least in part, the rinse solvent which may be directed at the parts after the parts have been raised out of the bath and are held in the vapor zone.

## Claims

1. A method for cleaning and drying the surface of a non-absorbent article to remove hydrophilic residues, by immersion of said article in a liquid azeotropic organic solvent having a density greater than water and in which water is soluble in an amount between 0.001 and 1.0 weight percent, characterized in that:

(a) the article is immersed in a first bath (11) of said solvent while said solvent is boiling;

(b) the article is lifted from the first bath (11);

(c) the article is immersed in a second bath (12) of said solvent having a greater purity than the solvent in the first bath (11), and being at a temperature below its boiling point;

(d) the article is lifted from the second bath (12) into the vapour phase of said solvent;

(e) solvent in said vapour phase is condensed, dried and employed to rinse said article while it is retained in said vapour phase;

(f) said article is retained in said solvent vapour until condensation of vapour on the article has ceased;

(g) solvent from the first bath (11), which has been contaminated with hydrophilic residues as a result of said cleaning, is continuously removed from said bath and purified by:

(i)
filtration (24) to free it from particulates, (ii)
distilling (29) the filtered solvent from step (i) to separate relatively high boiling components, and

(iii)
drying (45) the distillate to remove any residual moisture; and

(h) dried solvent from step (g) (iii) is returned in regulated manner to the second bath.

2. A method according to Claim 1 characterized in that solvent from the second bath is used to replenish the first bath.

3. A method according to Claim 2 characterized in that the first bath is replenished by overflow of solvent from the second bath.

4. A method according to any one of Claims 1 to 3 characterized in that the distillate is dried in step (g) (iii) by means of a molecular sieve.

5. A method according to any one of Claims 1 to 4 characterized in that the distillate from step (g) (iii) is filtered before it is passed to step (h).

6. A method according to any one of Claim 1 to 5 characterized in that solvent in the second bath is agitated.

7. Apparatus for cleaning and drying the surface of a non-absorbent article to remove hydrophilic residues, by immersion of said article in a liquid azeotropic organic solvent comprising:

(a) a heatable sump adapted to contain a first bath (11) of said solvent;

(b) a second sump adapted to contain a second bath (12) of said solvent;

(c) means (16) for condensing solvent vapour above said sumps, means (19) for drying condensed solvent, and means (64) for spraying dried condensed solvent over an article held over said second sump;

(d) means (22, 23, 25, 26, 27) for conducting solvent from the first sump, through filtration (24) distillation (29) and drying means (45), and;

(e) means (50, 63) for returning dried solvent from step

(d) in regulated manner to the second sump.

8. Apparatus according to Claim 7 characterized by means (W) for conducting solvent from the second sump to the first sump.

9. Apparatus according to Claim 8 characterized in that the conducting means (W) is an overflow means.

10. Apparatus according to any one of Claims 7 to 9 characterized in that the drying means (45) in step (d) comprises a molecular sieve.

11. Apparatus according to any one of Claims 7 to 10 characterized by solvent - agitation means (B) in the second sump.

## Patentansprüche

1. Verfahren zum Reinigen und Trocknen der Oberfläche eines nichtabsorbierenden Gegenstandes zur Beseitigung hydrophiler Rückstände durch Eintauchen des Gegenstandes in ein flüssiges azeotropes organisches Lösungsmittel mit einer Dichte größer als Wasser, und in dem Wasser in einer Menge zwischen 0,001 und 1,0 Gewichtsprozent löslich ist, dadurch gekennzeichnet, daß

(a) der Gegenstand in ein erstes Bad (11) des Lösungsmittels eingetaucht wird, während das Lösungsmittel kocht,

(b) der Gegenstand aus dem ersten Bad (11) gehoben wird,

(c) der Gegenstand in ein zweites Bad (12) des Lösungsmittels mit einer größeren Reinheit als das Lösungsmittel in dem ersten Bad eingetaucht wird und wobei es bei einer Temperatur unter seiner Siedetemperatur gehalten wird,

(d) der Gegenstand aus dem zweiten Bad (12) in die Dampfphase des Lösungsmittels gehoben wird,

(e) das Lösungsmittel in der Dampfphase kondensiert, getrocknet und zum Waschen des Gegenstandes, während er in der Dampfphase gehalten wird, angewendet wird,

(f) der Gegenstand in dem Lösungsmitteldampf gehalten wird, bis die Kondensierung des Dampfes auf dem Gegenstand aufgehört hat,

(g) das Lösungsmittel aus dem ersten Bad (11), das als Ergebnis des Reinigens mit hydrophilen Rückständen kontaminiert worden ist, kontinuierlich aus dem Bad entfernt und durch:

(i) Filtrieren (24), um es von Teilchen zu befreien,

(ii) Destillieren (29) des filtrierten Lösungsmittels aus Schritt (i), um relativ hochsiedende Komponenten abzutrennen, und

(iii) Trocknen (45) des Destillats, um jegliche Restfeuchtigkeit zu entfernen, gereinigt wird, und

(h) das getrocknete Lösungsmittel des Schrittes (g) (iii) auf geregelte Weise zu dem zweiten Bad zurückgeführt wird.

2. Verfahren nach Anspruch 1, dadurch gekennzeichnet, daß das Lösungsmittel aus dem zweiten Bad zum Auffüllen des ersten Bades verwendet wird.

3. Verfahren nach Anspruch 2, dadurch gekennzeichnet, daß das erste Bad durch Überlauf des Lösungsmittels aus dem zweiten Bad aufgefüllt wird.

4. Verfahren nach einem der Ansprüche 1 bis 3, dadurch gekennzeichnet, daß das Destillat in der Stufe (g) (iii) mittels eines Molekularsiebs getrocknet wird.

5. Verfahren nach einem der Ansprüche 1 bis 4, dadurch gekennzeichnet, daß das Destillat aus der Stufe (g) (iii) filtriert wird, bevor es in die Stufe (h) geführt wird.

6. Verfahren nach einem der Ansprüche 1 bis 5, dadurch gekennzeichnet, daß das Lösungsmittel in dem zweiten Bad gerührt wird.

7. Vorrichtung zum Reinigen und Trocknen der Oberfläche eines nichtabsorbierenden Gegenstandes zum Beseitigen hydrophiler Rückstände durch Eintauchen des Gegenstandes in ein flüssiges azeotropes organisches Lösungsmittel mit:

(a) einem geeigneten heizbaren Behälter, um ein erstes Bad (11) des Lösungsmittels zu enthalten,

(b) einem zweiten geeigneten Behälter, um ein zweites Bad (12) des Lösungsmittels zu enthalten,

(c) einer Einrichtung (16) zum Kondensieren des Lösungsmitteldampfes über den Behältern, einer Einrichtung (19) zum Trocknen des kondensierten Lösungsmittels und einer Einrichtung (64) zum Sprühen kondensierten Lösungsmittels über einen über dem zweiten Behälter gehaltenen Gegenstand,

(d) einer Einrichtung (22, 23, 25, 26, 27) zum Leiten des Lösungsmittels aus dem ersten Behälter durch Filtrier (24), Destillier- (29) und Trocken-Einrichtungen (45), und

(e) einer Einrichtung (50, 63) zum Rückführen getrockneten Lösungsmittels aus der Stufe (d) zu dem zweiten Behälter auf geregelte Weise.

8. Vorrichtung nach Anspruch 7, gekennzeichnet durch eine Einrichtung (W) zum Leiten des Lösungsmittels aus dem zweiten Behälter zu dem ersten Behälter.

9. Vorrichtung nach Anspruch 8, dadurch gekennzeichnet, daß die Leiteinrichtung (W) eine Überfließeinrichtung ist.

10. Vorrichtung nach einem der Ansprüche 7 bis 9, dadurch gekennzeichnet, daß die Trockeneinrichtung (45) in der Stufe (d) ein Molekularsieb aufweist.

11. Vorrichtung nach einem der Ansprüche 7 bis 10, gekennzeichnet durch eine Lösungsmittelrühreinrichtung (B) in dem zweiten Behälter.

**Revendications**

1. Procédé pour nettoyer et sécher la surface d'un article non-absorbant afin d'éliminer les résidus hydrophiles, par immersion de l'article, dans un solvant organique azéotropique liquide ayant une masse spécifique supérieure à celle de l'eau et dans lequel l'eau est soluble suivant une quantité comprise entre 0,001 et 1,0 en poids, caractérisé en ce que

(a) l'article est immergé dans un premier bain (11) du solvant alors que le solvant est en ébullition;

(b) l'article est remonté du premier bain (11);

(c) l'article est immergé dans un second bain (12) du solvant ayant une pureté supérieure à celle du solvant du premier bain (11), et étant à une température inférieure à son point d'ébullition;

(d) l'article est remonté du second bain (12) dans la phase vapeur du solvant;

(e) le solvant dans la phase vapeur est condensé, séché et employé pour rincer l'article alors qu'il est maintenu dans la phase vapeur;

(f) l'article est maintenu dans la vapeur de solvant jusqu'à cessation de la condensation de la vapeur sur l'article,

(g) le solvant du premier bain (11), qui a été contaminé par les résidus hydrophiles à la suite du nettoyage, est continuellement enlevé du bain et purifié par:

(i)
filtration (24) afin de le débarrasser des particules,

(ii)
distillation (29) du solvant filtré provenant de l'étape (i) pour séparer des composants à point d'ébullition relativement élevé, et

(iii) séchage (45) du distillat pour éliminer l'humidité résiduelle, et

(h) le solvant séché à la suite de l'étape (g) (iii) est renvoyé de manière régulée au second bain.

2. Procédé selon la revendication 1, caractérisé en ce que le solvant provenant du second bain est utilisé pour regarnir le premier bain.

3. Procédé selon la revendication 2, caractérisé en ce que le premier bain est regarni par débordement du solvant du second bain.

4. Procédé selon l'une quelconque des revendications 1 à 3, caractérisé en ce que le distillat est séché dans l'étape (g) (iii) au moyen d'un tamis moléculaire.

5. Procédé selon l'une quelconque des revendications 1 à 4, caractérisé en ce que le distillat de l'étape (g) (iii) est filtré avant passage à l'étape (h).

6. Procédé selon l'une quelconque des revendications 1 à 5, caractérisé en ce que le solvant du second bain est soumis à agitation.

7. Dispositif pour nettoyer et sécher la surface d'un article non absorbant afin d'éliminer les résidus hydrophiles, par immersion de l'article dans un solvant organique azéotropique liquide, comprenant:

(a) un récipient pouvant être chauffé destiné à contenir un premier bain (11) du solvant;

(b) un second récipient destiné à renfermer un second bain (12) du solvant;

(c) un moyen (16) pour condenser la vapeur du solvant au-dessus des récipients, un moyen (19) pour sécher le solvant condensé, et un moyen (64) pour pulvériser le solvant condensé séché sur un article maintenu au-dessus du second récipient;

(d) des moyens (22, 23, 25, 26, 27) pour acheminer le solvant provenant du premier récipient, par l'intermédiaire de moyens de filtration (24), de distillation (29) et de séchage (45); et

(e) un moyen (50, 63) pour ramener régulièrement le solvant séché provenant de l'étape (d) au second récipient.

8. Dispositif selon la revendication 7, caractérisé par un moyen (W) pour acheminer le solvant du second récipient au premier récipient.

9. Dispositif selon la revendication 8, caractérisé en ce que le moyen d'acheminement (W) est un moyen de débordement.

10. Dispositif selon l'une quelconque des revendications 7 à 9, caractérisé en ce que le moyen de séchage (45) dans l'étape (a) comprend un tamis moléculaire.

11. Dispositif selon l'une quelconque des revendications 7 à 10, caractérisé par un moyen (B) provoquant l'agitation du solvant dans le second récipient.